# EUROPEAN PATENT SPECIFICATION

(11) **EP 4 465 108 B1**
(45) Date of publication and mention of the grant of the patent: **18.02.2026**
(21) Application number: 24175595.8
(22) Date of filing: 14.05.2024
(51) Int. Cl.: G02B 21/00, G02B 21/06, G02B 21/36, G01N 21/64

(54) **METHOD AND APPARATUS FOR HIGH RESOLUTION MICROSCOPY**
VERFAHREN UND VORRICHTUNG FÜR HOCHAUFLÖSENDE MIKROSKOPIE
PROCÉDÉ ET APPAREIL POUR MICROSCOPIE À HAUTE RÉSOLUTION

(30) Priority: 16.05.2023 EP 23173519
(43) Date of publication of application: 20.11.2024
(73) Proprietor: Miltenyi Biotec B.V. & Co. KG, 51429 Bergisch Gladbach (DE)
(72) Inventor: MÜLLER, Marcel, 51429 Bergisch Gladbach (DE); SPIECKER, Heinrich, 51429 Bergisch Gladbach (DE); DEEG, Andreas, 51429 Bergisch Gladbach (DE)
(74) Representative: Kisters, Michael Marcus

(56) References cited:
- US-A1- 2014 313 576
- US-A1- 2019 212 266

## Description

The invention relates to a method and to an apparatus for high resolution microscopy, in particular 3D microscopy (i.e. microscopy for obtaining three-dimensional information from a sample).

In structured illumination microscopy (abbreviated to SIM), which is already generally known, a sample is illuminated in a structured manner and the fluorescent light is detected using a camera. Several images of the sample are acquired, wherein the structured illumination is varied between these images. In this regard, periodic structures with many illumination lines or illumination points are used for the illumination and are slightly displaced laterally on the sample from acquisition to acquisition. Next, a homogeneously illuminated image of the sample can be reconstructed from several of these acquisitions (what are known as raw images), to some extent already with a resolution below the diffraction limit.

For SIM microscopy, until now, 1D line lattices have mostly been used. In order to increase the resolution or in order to obtain good confocality (in the context of the invention, defined as the suppression of fluorescent light which is generated in the sample outside the focal plane), the sample had to be acquired with different orientations of that 1D lattice illumination. Thus, the illumination not only had to be displaced laterally, but it also had to be rotated. This can be technically complicated, and meant that very many raw images had to be acquired in order to reconstruct an image of the sample.

However, with illumination patterns which are modulated in two dimensions, it is possible to obtain images with a higher resolution and/or good confocality with only lateral displacements; see M. Schropp and R. Uhl, "Two-dimensional structured illumination microscopy" in Journal of Microscopy, 2014, 256 23-36.

For both confocality and also to improve the resolution, patterns with primitive vectors "a" and "b" with the same length, i.e. symmetrical 2D patterns, are used here.

In almost all SIM systems, a field of view which is the size of the camera sensor (full surface area) is illuminated. In contrast, US 2014/313576 proposes a SIM method in which the sample is illuminated with only a narrow light strip which is modulated with the lattice. The detection of the fluorescent light is carried out here in only a restricted region of the camera (what is known as the "region of interest", abbreviated to ROI), the position of which is selected to match that of the narrow light strip. Using what are known as rolling shutter (RS) cameras, inter alia, successive acquisitions can be made continuously. In this regard, the modulated illuminating strip is scanned over the sample synchronously with the moving ROI of the rolling shutter camera. Light from planes outside the focus are hereby largely not detected by the camera (in contrast to sheet illumination), because it impinges on the camera outside the active ROI. Because the out-of-focus light is only suppressed in the regions outside the line of illumination, this method is also spoken of as line-confocal detection. With the aid of suitable algorithms, an image can then be computed from several such confocally acquired structured illuminated raw images, with even better suppression of the out-of-focus light.

An often interesting factor in SIM microscopy is the fraction of the sample surface which is illuminated in a raw image, or in other words the density of the illumination points. If the sample is illuminated by the image of a transmitting amplitude lattice, this corresponds to the fraction of the transmitting area of the lattice, what is known as the fill factor. In order to obtain a high out-of-focus light suppression (confocality), then for each raw image, only a relatively small portion of the sample surface, concentrated as far as possible but also distributed, must be illuminated (point pattern). This means that what is known as "crosstalk" of the fluorescence response from different illumination points is minimised. "Crosstalk" in this case means that fluorescent light from one illumination point arrives at a position on the camera sensor which belongs to another illumination point. This crosstalk deteriorates the confocality and the signal-to-noise ratio (abbreviated to SNR).

Various methods can be used to remove the remaining out-of-focus signal from the acquired raw images and the confocal image of the samples can be computed. The simplest method here is certainly the "2D pinholing" method, in which the out-of-focus light is suppressed on the raw images by setting the pixels outside the regions associated with the illumination points to zero. This "2D pinholing" is mentioned, for example, in US 2003/0021016 A1. US 2003/0021016 A1 describes an arrangement in which a diffractive beam splitter generates a plurality of illumination points, so that in order to increase the acquisition rate over the conventional single point confocal microscopy, at each point in time, a plurality of regions of the sample are simultaneously illuminated in parallel. US 2006/0017001 A1 describes a microscopy arrangement in which, instead of a single-point or multiple-point illumination, a line in the sample is illuminated and reproduced on a detector. DE 10 2007 009 550 A describes a SIM microscopy apparatus in which a pattern of illumination points is focussed into a sample.

The objective of the present invention is to provide a method and an apparatus for high resolution microscopy which is more rapid than conventional methods and which improves the signal-to-noise ratio in the compiled image of the sample. In particular, the method and the apparatus should be suitable for 3D microscopy.

The objective is achieved by a microscopy method in accordance with claim 1 or by a microscope apparatus in accordance with claim 7. Advantageous further embodiments form the subject matter of the respective dependent claims.

In a first aspect, the invention concerns a microscopy method, wherein
- an illuminating light (27a) produced by a light source (27) illuminates a sample (32) over an illuminating beam path (24),
- an objective (20) is disposed in the illuminating beam path (24) in order to focus the illuminating light (27a) into the sample (32),
- a detector (31) with an adjustable region of interest (12) detects radiation (25a) from the sample (32) over a detecting beam path (25) containing the objective (20),
- an illumination modulator (17) is disposed in the illuminating beam path (24),
- optics (28) disposed in the illuminating beam path (24) together with the illumination modulator (17) produce a light strip (3) of the illuminating light (27a) in the sample (32) at the focus of the objective (20), wherein the light strip (3) comprises a plurality of points of illumination (8, 11) and has an axial direction (3a) which is transverse to the illuminating beam path (24) at the location of the sample (32),
- a scanning unit (29) disposed in the illuminating beam path (24) is controlled in order to displace the light strip (3) of points of illumination (8, 11) in the sample (32) in a scanning direction (4) which is transverse to the direction of propagation of the illuminating beam path (24),
**characterized in that** during a scan of the light strip (3) of the illuminating light (27a) in the sample (32), the illumination modulator (17) produces an illumination pattern (17a) which has a plurality of points of illumination (8, 11) which are disposed in the form of an asymmetrical 2D Bravais lattice (G4, G5, G6) with a first, longer primitive vector (a) and a second, shorter primitive vector (b) and in that the projection of the first primitive vector onto the axial direction (3a) of the light strip (3) is longer than the projection of the second primitive vector (b) onto the axial direction (3a) of the light strip (3).

The axial direction of the light strip is defined here as the axis of the strip perpendicular to the beam path. In a variation of the invention, the scanning unit (29) disposed in the illuminating beam path (24) may also be identical to the mask/illumination modulator.

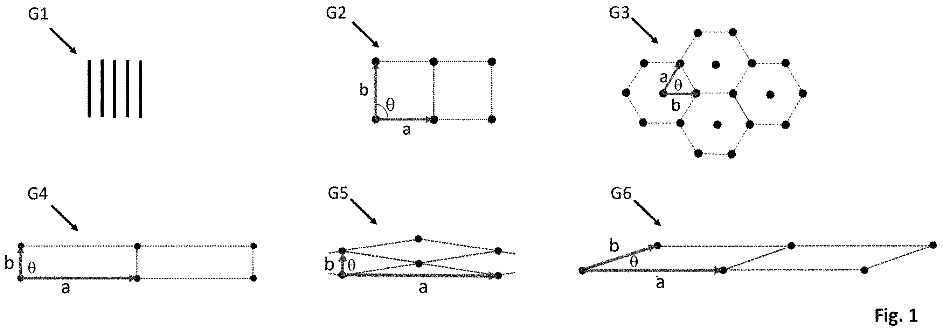

The term "asymmetrical 2D Bravais lattice" as used in the context of the invention means the following. In general, lattices/structures exist which are only modulated in a single dimension (what are known as line lattices) which will be referred to below as one-dimensional or "1D" lattices - see Figure 1, lattice G1. Lattices which are modulated in two dimensions (2D) are generally described with the aid of two primitive vectors (a, "b") which span a unit cell, and - as is known from crystallography - is divided into five (Bravais) lattice structures (see Figure 1, lattices G2 - G6). The checkerboard/square lattice G2 and the hexagonal lattice G3 are distinguished by primitive vectors "a" and "b" of the same length, i.e. with identical spacings between at least the next four lattice points. These lattices G2, G3 will also be referred to below as "symmetrical 2D" patterns or lattices. In contrast, the three other lattices, rectangular (G4), centred rectangular (G5) or oblique (G6), will be described as "asymmetrical 2D" patterns or lattices (see Figure 1). In the case of a "asymmetrical 2D" pattern or lattice, the distances from one point to the neighbouring lattice points are different.

The invention is particularly suitable for three-dimensional fluorescence microscopy. It has surprisingly been shown that the use of asymmetrical 2D illumination patterns in combination with a scanned line illumination of the pattern offers considerable advantages. Preferably, the illumination may be selected in a manner such that the axial direction of the light strip has an angle of 0 - 60° to the longer primitive vector of the Bravais lattice.

The method is particularly advantageous when the light strip is so narrow that its maximum width is that of the shorter primitive vector (b) of the Bravais lattice, or even preferably a maximum of 0.8 times or even a maximum of 0.6 times that of the shorter primitive vector (b) of the Bravais lattice. These measures can ensure that in the direction of the longer primitive vector (a), the light strip in fact illuminates or activates several points of illumination of the Bravais lattice parallel to the shorter primitive vector (b) of the Bravais lattice, but no more than one lattice point is illuminated parallel to the shorter primitive vector (b) of the Bravais lattice at each point in time. This has the advantage that in every direction in space, a contrast-reducing "crosstalk" of the image information (or fluorescent light) contained in neighbouring lattice points is prevented: parallel to the axial direction of the light strip, because of the longer primitive vector, the lattice points are sufficiently widely spaced apart to completely or largely suppress any crosstalk. Transverse to the light strip, i.e. parallel to the shorter primitive vector of the Bravais lattice, the width of the light strip which has been reduced to one row of the lattice points ensures that no more than one lattice point is illuminated at each point in time. By means of these measures, every piece of optical information from the sample can be optimally associated with a specific point of illumination and therefore the contrast can be significantly improved.

At the same time, the invention offers further advantages: it enables the points of illumination transverse to the axial direction of the light strip to be brought significantly closer together than would be conceivable with a symmetrical 2D Bravais lattice. This in turn means that what is known as the fill factor for the illumination modulator becomes significantly larger than with a comparable symmetrical 2D lattice. Because of the higher fill factor, light sources can be used without having to increase their light output to extremes. Thus, the microscopy method in accordance with the invention can be carried out in a cost-effective manner.

A further, decisive advantage is that the microscopy method in accordance with the invention permits significantly shorter acquisition times to be used than in conventional microscopy methods, because fewer acquisitions or raw images of a sample area or sample volume are sufficient. The larger is the 3D volume of the sample to be examined, the more important is this advantage.

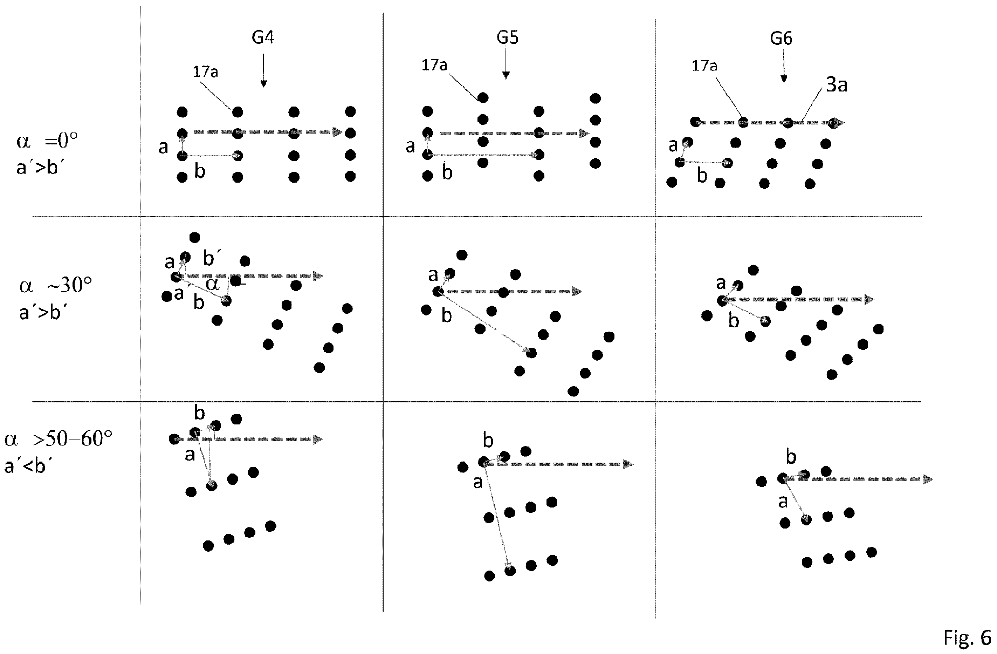

In the simplest case of the invention, the projections may lead to a variation in which a first primitive vector (a) of the Bravais lattice (G4, G5, G6) parallel to the axial direction (3a) of the light strip (3) is longer than a primitive vector (b) of the Bravais lattice (G4, G5, G6) transverse to the axial direction (3a) of the light strip (3). The variations in the projections are shown in Figure 6.

The scanning direction (4) may additionally be transverse to the axial direction (3a) of the light strip (3).

Preferably, the first, longer primitive vector of the Bravais lattice is longer than the second, shorter primitive vector of the Bravais lattice by a factor of at least 1.5, more preferably by a factor of 2 to 15. The larger this factor is, then the stronger is the suppression of the crosstalk of information from neighbouring image points, albeit at the expense of a reducing fill factor.

Preferably, the region of interest of the surface detector can be limited to a specific "active region" (also "ROI"). All other regions of the surface detector are ignored or discarded. The region of interest of the surface detector may be synchronised with a displacement of the light strip by means of the scanning unit. This has the advantage of providing what is known as "line-confocal detection", in which light from outside the region illuminated by the light strip is suppressed by the selective reading of the surface detector. In a variation of the invention, the height of the region of interest is approximately the same (i.e. ± 10%) as the laser line/point line.

In a further variation, the region of interest (12) of the surface detector (31) is rectangular with a longer and a shorter side, wherein the longer side is parallel to the axial direction (3a) of the light strip (3) reproduced on the surface detector (31).

In a further variation, the illumination modulator (17) is planar in configuration.

In a further variation, optics (28) are disposed between the light source (27) and the illumination modulator (17) in the illuminating beam path (24), the optics producing a light strip (3) of the illuminating light (27a) on the planar illumination modulator (17). The light strip (3) has an axial direction (3a) transverse to the illuminating beam path (24) at the location of the illumination modulator (17), and the scanning unit (29) is controlled in order to displace the light strip (3) of the illuminating light (27a) on the illumination modulator (17) in a scanning direction (4) which is transverse to the axial direction (3a) of the light strip (3) and transverse to the direction of propagation of the illuminating beam path (24).

In a further variation, the light strip (3) has a width which is a maximum of 50% (for example 10-50%) larger than the FWHM diameter of a point of illumination (8, 11) in the sample (32), and in addition is smaller than the separation of the points in the direction of the shorter primitive vector.

In order to compile an image of a plane or of a 3D volume of the sample, preferably, a plurality of acquisitions are produced, of which each acquisition comprises a scan of the light strip over the illumination modulator. A relative movement between the sample and illumination occurs between two acquisitions. In this regard, these relative movements may either be always in the same direction in space or, however, in alternation or in a specific sequence in a plurality of mutually transverse directions in space. In order to record the image of a 3D volume of the sample, preferably, a plurality of images of a plurality of mutually parallel planes of the sample are acquired. The compilation of the image may be carried out in an analytical unit, for example in an appropriately programmed microprocessor or computer.

The light source may be coherent (i.e. producing coherent light) or incoherent (i.e. producing incoherent light).

Various technical solutions may be considered as the illumination modulator. As an example, a reflective element may be used as the illumination modulator, for example what is known as a Digital Micro Mirror Device (DMD). As an alternative, the illumination modulator may also comprise a transmissive element, for example a spatial light modulator (SLM), diffractive optical elements (DOE), amplitude masks or phase gratings. All of the aforementioned types of illumination modulators may be used independently of one another, whether or not the light source is a coherent or an incoherent light source. In the case of an incoherent light source, the illumination modulator may be configured such that illumination patterns are produced in the form of the asymmetrical 2D Bravais lattice interferometrically, i.e. by interference between the illuminating light of the light source transmitted or reflected by the illumination modulator.

There are a number of possibilities for producing a relative movement between the sample and illumination between two acquisitions: the displacement of the pattern in the sample may, for example, be carried out in the case of DMDs or SLMs by electronic switching of the micro-mirror (DMD) or of the display (SLM). In the case of amplitude masks or phase gratings, a mechanical displacement in one or two directions of the mask/grating is employed in the intermediate image, for example. In addition or as an alternative, a displacement of the illumination pattern in the sample may be obtained with the aid of a (motorized) tilted glass plate in a portion of the beam path.

In an advantageous variation, the illumination modulator has a plurality of mutually parallel cylindrical lenses, wherein a row of apertures in an (amplitude) mask is associated with each cylindrical lens. In this regard, the cylindrical lenses are preferably configured such that illuminating light is concentrated onto the apertures in the mask. This improves the light output of the illuminating light which, put another way, means that less expensive light sources can be used.

In another variation, the illumination modulator has a plurality of mutually parallel cylindrical lenses and is pulse illuminated by the illuminating light. In this regard, the light source itself may be pulsed, for example as a stroboscopic light. In this case, each cylindrical lens is preferably parallel to the shorter primitive vector (b) of the Bravais lattice, i.e. transverse to the light strip illuminating the illumination modulator. In this way, the cylindrical lenses ensure the concentration of the illuminating light along the light strip onto individual, discrete points, their separation from each other defining the longer primitive vector (a) of the Bravais lattice. The combination of the frequency of the pulsed illumination and the scan rate transverse to the light strip (in other words: along the cylindrical lenses) produces the shorter primitive vector (b) of the Bravais lattice. An advantage of this arrangement is that the shorter primitive vector (b) of the Bravais lattice can be adjusted by selecting the scan rate for the light strip and the pulse frequency of the illuminating light.

In a second aspect, the invention concerns a microscopy apparatus (100), comprising
- a light source (27) which produces illuminating light (27a), which illuminates a sample (32) over an illuminating beam path (24),
- an objective (20) disposed in the illuminating beam path (24), for focussing the illuminating light (27a) into the sample (32),
- a detector (31) with an adjustable region of interest (12) which detects radiation (25a) from the sample (32) over a detection beam path (25) containing the objective (20),
- an illumination modulator (17) disposed in the illuminating beam path (24),
- optics (28) disposed in the illuminating beam path (24) which, together with the illumination modulator (17), produce a light strip (3) of the illuminating light (27a) in the sample (32) at the focus of the objective (20), wherein the light strip (3) comprises a plurality of points of illumination (8, 11) and has an axial direction (3a) which is transverse to the illuminating beam path (24) at the location of the sample (32),
- a scanning unit (29) disposed in the illuminating beam path (24), which is controlled in order to displace the light strip (3) of points of illumination (8, 11) in the sample (32) in a scanning direction (4) which is transverse to the direction of propagation of the illuminating beam path (24),
**characterized in that** during a scan of the light strip (3) of the illuminating light (27a) in the sample (32), the illumination modulator (17) produces an illumination pattern (17a) which has a plurality of points of illumination (8, 11) which are disposed in the form of an asymmetrical 2D Bravais lattice (G4, G5, G6) with a first, longer primitive vector (a) and a second, shorter primitive vector (b), and the projection of the first primitive vector (a) onto the axial direction (3a) of the light strip (3) is longer than the projection of the second primitive vector (b) onto the axial direction (3a) of the light strip (3).

In general, each secondary aspect discussed in connection with the microscopy method in accordance with the invention may also be applied to the microscopy apparatus in accordance with the invention, and vice-versa.

The variations discussed in the first aspect of the invention (i.e. the microscopy method) are equally applicable to the second aspect (i.e. the microscopy apparatus).

The first primitive vector of the Bravais lattice is preferably longer than the second (shorter) primitive vector of the Bravais lattice by a factor of at least 1.5, more preferably in fact longer than the shorter primitive vector by a factor of 2 to 15. The larger this factor is, the stronger will be the suppression of the "crosstalk" between the information from neighbouring points of illumination, albeit at the cost of a reduced fill factor.

Preferably, the surface detector is configured in a manner such that a region of interest of the detector (i.e. an active region, also known as the ROI), can be selected. This means that the surface detector can be operated in a manner such that only the region of interest is acquired and all other regions of the detector are discarded or ignored. This improves the contrast that can be obtained, i.e. the resolution, because scattered light from other regions can be effectively suppressed. The surface detector may, for example, be a (CCD) camera. The surface detector may be suitable for or configured for a rolling shutter operation.

Preferably, the microscopy apparatus has a controller which is configured to synchronise the region of interest of the surface detector with a displacement of the light strip by means of the scanning unit. In this manner, what is known as line-confocal detection is made possible, in which scattered light from regions outside the region of the sample illuminated by the light strip are particularly effectively suppressed. Preferably, the ROI running synchronously with the line scan has a minimum width of one point of illumination and a maximum size which is the spacing of the points in the direction of the shorter primitive vector.

The illumination modulator may be produced in a variety of manners. As an example, the illumination modulator may be an amplitude mask with a structure in the form of the asymmetrical 2D Bravais lattice. As already discussed above, the illumination modulator may be configured reflectively, transmissively or interferometrically. Preferably, in the case of an illumination modulator with a planar phase mask or amplitude mask, this mask is positioned in the intermediate image. The mask can then be illuminated with a line (initially not modulated). The line is modulated into a line of points by means of the mask. The line may, for example, be produced by a Powell lens. The illumination of the sample is then carried out via a scan of the light line (for example with a Galvo scanner) via the mask and focussing into the sample.

In a variation of the invention, the illumination modulator has a plurality of mutually parallel cylindrical lenses. The cylindrical lenses concentrate the illuminating light along the light strip and therefore lead to a particularly high light output. In the case in which the orientation of the cylindrical lenses is parallel to the scanning direction of the light strip over the illumination modulator, the cylindrical lenses have the additional advantage that the focussing properties do not vary during the scan.

In a further variation of the invention, each cylindrical lens is associated with a row of apertures in an (amplitude) mask. The cylindrical lenses then have the advantage that illuminating light is concentrated onto the apertures in the mask and therefore, a particularly high light output is obtained.

In an alternative variation, the light source may be pulsed in order to produce individual points of light during the scan of the light strip parallel to the cylindrical lenses.

The microscopy apparatus may have an evaluation unit which is configured to compile an image of a plane or of a volume of the sample from a plurality of acquisitions, of which each acquisition comprises a scan of the light strips over the illumination modulator.

The microscopy device may have a drive or a displacement unit in order to obtain a relative movement between sample and illumination pattern between two acquisitions. This ensures that after several displacements, acquisitions of each region of the desired volume of the sample are obtained and in total, a complete image can be compiled.

The microscopy apparatus is preferably configured in a manner such that the light strip is narrow enough to produce a maximum of one row of points of illumination of the Bravais lattice at each point in time in a direction transverse to its axial direction.

Preferably, the first, longer primitive vector (a) of the Bravais lattice (G4, G5, G6) is at an angle to the axial direction (3a) of the light strip (3) of 0 - 60°, particularly preferably of 0 - 20°.

Advantageous embodiments of the invention will now be discussed in more detail with the aid of the drawings, in which:
- Figure 1: shows one-dimensional and two-dimensional lattice structures and their primitive vectors
- Figure 2: shows a diagrammatic representation of a mask, an illumination of a sample and an image acquired by the detector during the scan of the line (2B) with line confocal filtering/narrow synchronised ROI
- Figure 3: shows a diagrammatic representation of an embodiment of the microscopy apparatus in accordance with the invention with line confocal filtering/narrow synchronised ROI
- Figure 4: shows a top view and a side view of an illumination modulator with cylindrical lenses,
- Figure 5: shows a further exemplary variation of an illumination modulator.
- Figure 6: shows an exemplary representation of the projection of the primitive vectors, with alpha for the angle of the axial direction of the light strip with respect to the first, longer primitive vector "a" and "a"' and "b'" for the projection of primitive vector "a" and "b" onto the illuminating strip axis.

Identical components in the figures are consistently provided with identical reference symbols.

As already discussed above, Figure 1 shows a one-dimensional lattice G1 as well as two-dimensional Bravais lattices G2 - G6. Among the two-dimensional Bravais lattices, the variations G2 (square) and G3 (hexagonal) are symmetrical 2D lattices, while the lattices G4 (rectangular), G5 (centred-rectangular) and G6 (oblique) are asymmetrical 2D Bravais lattices. What are known as the primitive vectors of the lattice are indicated by the letters "a" and "b".

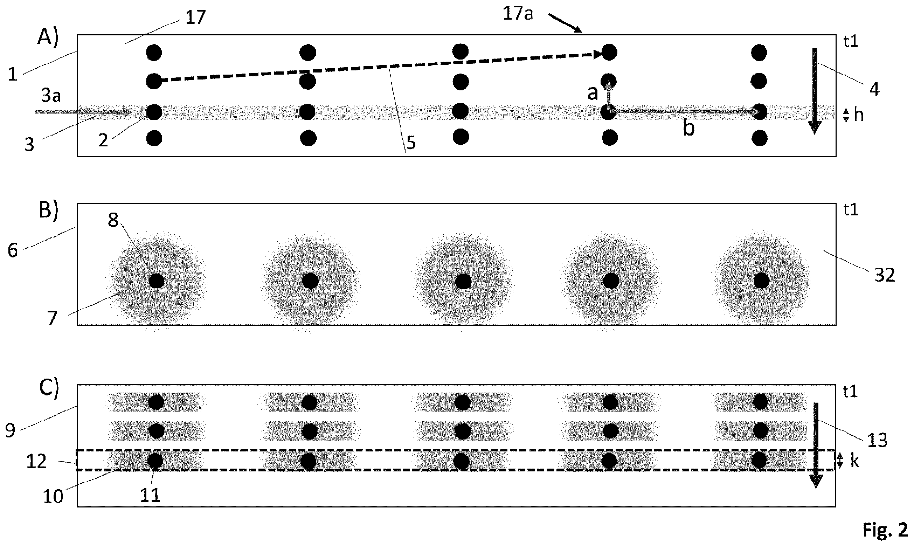

Figure 2 has three different sections A), B) and C). Section A) of Figure 2 shows, in top view, an exemplary embodiment of an intermediate image plane or of an illumination modulator 17, which in this example is configured as an asymmetrical 2D amplitude transmission lattice. The reference symbol 1 indicates the entire field of illumination; 2 indicates the transmitting holes of the illumination modulator 17. These holes 2 are in the form of an asymmetrical 2D (here specifically: rectangular) Bravais lattice G4, G5, G6 with a first, longer primitive vector "a" and a second, shorter primitive vector "b". The first, longer primitive vector "a" is approximately 3 or 4 times longer than the shorter primitive vector "b" in the exemplary embodiment.

As will be discussed below, the illumination modulator 17 lies across or even perpendicular to an illuminating beam path. It is illuminated by a comparatively narrow light strip 3 the axial direction 3a of which is parallel to the first, longer primitive vector a of the Bravais lattice G4 of the illumination modulator 17. It can be seen that a width of the light strip 3 perpendicular to its axial direction 3a is approximately as wide as one diameter of the holes 2 or only slightly larger, but in any case smaller than the length of the second primitive vector "b". The width of the line of light 3 perpendicular to its axial direction 3a is indicated by h.

During the course of the microscopy method, the light strip 3 is scanned in a scanning direction 4, i.e. here, parallel to the shorter primitive vector "b" of the Bravais lattice G4. At point in time t1, starting at the upper edge of the field of illumination 1, during one complete scan, the light strip 3 passes over the entire field of illumination 1 once, i.e. once over the region of the illumination modulator 17 to be illuminated. As a result, a single acquisition of a layer is acquired from the sample 32. Following the acquisition, a relative movement between the illumination modulator 17 and the sample 32 is carried out in a direction of movement 5. A plurality of scans are carried out in stepwise succession and a plurality of acquisitions are made until finally, a surface of the sample 32 has been completely imaged and illuminated.

Part B) of Figure 2 shows the resulting illumination inside the sample 32 at a specific point in time which corresponds to the position of the light strip 3 shown in part A). In the field of view 6, specifically in the focal plane inside the sample 32, the sample is excited into fluorescence. In correspondence with each hole 2 of the amplitude mask (illumination modulator) 17, the image exhibits in-focus fluorescence 8 from the focal plane as well as blurred fluorescent light from other places of the sample 32.

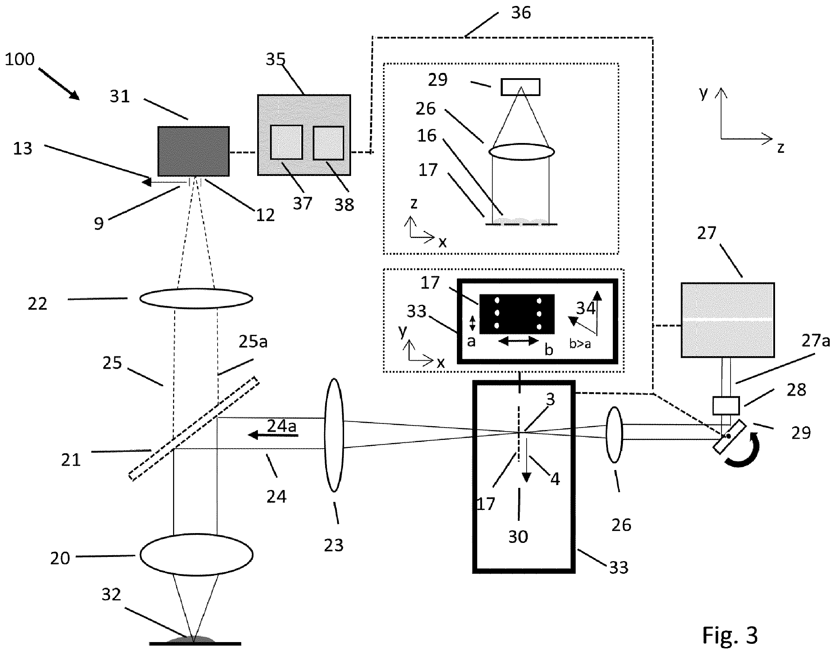

Part C) of Figure 2 shows the situation on a sensor field of view 9 of a surface detector 31 which is used (see Figure 3). Reference symbol 10 indicates the out-of-focus (not sharp) fluorescent light registered by the detector which, because of the ROI, is only part of the entire out-of-focus fluorescent light arriving at the detector; 11 indicates the (comparatively sharp thereto) points of the fluorescent light from the focal plane inside the sample 32. Each point of fluorescent light 11 is surrounded by an unfocussed out-of-focus region 10. A rectangle which is shown in dashed lines at 12 represents the active region or region of interest (also: ROI) of the surface detector 31. The region of interest 12 is that region of the sensor field of view 9 which is actually acquired; all remaining regions outside the region of interest 12 are suppressed. The arrow 13 indicates the direction in which the ROI is moved over the sensor synchronously with the line of light. In this direction 13, the region of interest 12 is extremely narrow; it is indicated by "k". The width "k" of the region of interest 12 is selected such that at any point in time, a maximum of one single row of points of illumination 11 from the sample 32 are detected. It can be seen that the distribution of the points of illumination 11 on the sensor field of view 9 is congruent with the lattice produced by the illumination modulator 17.

Figure 3 diagrammatically shows an exemplary embodiment of a microscopy apparatus 100 with which a sample 32 is examined. The microscopy apparatus comprises a light source 27 which may be either a coherent or an incoherent light source 27. The light source 27 produces illuminating light 27a which is deflected over an illuminating beam path 24 onto the sample 32. In the illuminating beam path 24, an objective 20 is disposed in front of the sample 32, which objective focusses the illuminating light 27a into the sample 32. The illuminating beam path 24 further contains a beam splitter 21, for example a partially transparent or dichroic mirror 21. While the illuminating beam path 24 is reflected at the beam splitter 21, radiation obtained from the sample 32 (for example fluorescent radiation) is transmitted through the beam splitter 21 into a detection or observation beam path 25. In the observation beam path 25 is an emission tubular lens 22 which concentrates the light 25a obtained from the sample 32 onto a surface detector 31 with a sensor field of view 9. The surface detector 31 may, for example, be a CCD camera 31. Preferably, the surface detector 31 may be operated with a selectively definable region of interest 12, for example in what is known as rolling shutter operation (RS operation).

Telecentric optics with an excitation tubular lens 23 and a scanner ocular lens 26 are located in the illuminating beam path 24. These optical elements 23, 26 produce an intermediate image in an intermediate image plane 30 which is focussed via the objective 20 into the sample 32. An illumination modulator 17 is at the site of the intermediate image plane 30. In the exemplary embodiment, this may be a planar, transmissive amplitude mask 17 which is orientated perpendicular to the direction of propagation 24a of the illuminating light 27a in the illuminating beam path 24. Mention was made in the introduction that instead of a transmissive mask, other technical solutions for the illumination modulator 17 are possible. In accordance with the invention, the illumination modulator 17 is configured to produce an illumination pattern 17a of the illuminating light 27a in the sample 32 (see Figure 2), wherein the illumination pattern 17a has a plurality of points of illumination 8, 11, which are disposed in the form of an asymmetrical 2D Bravais lattice G4, G5, G6.

Furthermore, a line generator 28 is located in the illuminating beam path 24. The line generator 28 has optics which generate a light strip 3 of the illuminating light 27a at the site of the illumination modulator 17. As an example, the line generator 28 may be a Powell lens or a diffractive optical element (DOE).

Furthermore, a scanning unit 29 is disposed in the illuminating beam path 24 between the line generator 28 and the illumination modulator 17, which may, for example, comprise a reflecting Galvo scanner. The scanning unit 29 is operated (for example by rotation of a mirror, see the arrow) in a manner such that the light strip 3 moves in the scanning direction 4 at the location of the illumination modulator 17.

The illumination modulator 17 is mounted on a displacement unit 33 or is carried by it. The displacement unit 33 is configured to displace the illumination modulator 17 in one or more directions in space 34, for example by means of one or more servomotors.

A controller 35 (for example a computer or microprocessor) is connected to the light source 27, the scanning unit 29, the displacement unit 33 and the surface detector 31 via signal lines and/or data lines 36. The controller 35 is configured and programmed to control, acquire and/or synchronise these components in a suitable manner. As an example, the controller 35 may control the light source 27 for pulsed operation of the light source 27, the scanning unit 29 for scanning the light strip 3 in the scanning direction 4, the displacement unit 33 for displacing the illumination modulator 17 and the surface detector 31 in order to select and acquire a region of interest 12. This enables a sequence in which initially, one or more (possibly digital) acquisitions are obtained from the region of the sample 32 to be examined, while the light strip 3 is scanned over the illumination modulator 17. After one complete scan of the light strip 3, a displacement of the illumination modulator 17 is carried out in one or two directions in space 34 by means of the displacement unit 33, before a further scan of the light strip 3 is carried out and one (or more) further acquisitions are made. These acquisitions are stored in a memory 37 which may, for example, be located in the controller 35. If a two-dimensional or three-dimensional area of the sample 32 is detected by sufficient acquisitions, the acquisitions are compiled in an evaluation unit 38 into a complete image. The evaluation unit 38 may also be part of the controller 35.

In a first insert, above the displacement unit 33, Figure 3 shows a view of the illumination modulator 17 in the z-direction, i.e. in the x-y plane transverse to the illuminating beam path 24. The illumination modulator 17 is simply and diagrammatically depicted as a mask with apertures 2, which are disposed in the form of an asymmetrical 2D Bravais lattice G4, G5, G6.

In a second insert in Figure 3 which is disposed at the top, the region of the illuminating beam path 24 from the scanning unit 29 to the illumination modulator 17 is diagrammatically shown in the x-z plane. Here, the z-direction runs in a region parallel to the direction of propagation 24a of the illuminating light 27a, while the x-direction is parallel to the axial direction 3a of the light strip 3 on the illumination modulator 17. This also diagrammatically indicates that in this exemplary embodiment, the illumination modulator 17 is configured as an amplitude mask 17 with holes 2 and with micro-cylindrical lenses 16.

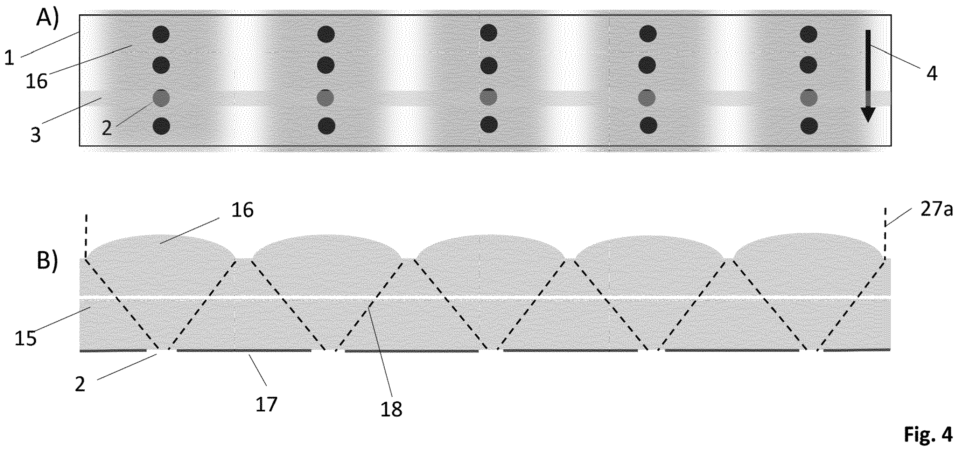

Figure 4 shows an exemplary variation of the illumination modulator 17. This is shown in top view in section A) of Figure 4, and in cross section in section B). These exemplary variations are characterized in that, in addition to an amplitude mask with holes 2 in a distribution in accordance with an asymmetrical 2D Bravais lattice, the illumination modulator 17 has a plurality of parallel cylindrical lenses 16 (specifically: micro-cylindrical lenses 16). The cylindrical lenses 16 may be produced by suitable configuration of a transparent substrate 15 (for example: glass) on the amplitude mask. Each cylindrical lens 16 lies parallel to a row of holes 2 of the amplitude mask and is orientated parallel to the scanning direction 4 of the light strip 3 (i.e. transverse to the axial direction 3a of the light strip 3). The cylindrical lenses 16 serve to concentrate the incident illuminating light 27a onto the apertures 2 of the amplitude mask 17, as shown by the convergent profile 18 of the beam.

In a further embodiment, the illumination modulator 17 comprises only the cylindrical lenses 16, without an amplitude mask with holes. At the same time, however, the operation of the light source 27 may be pulsed. When the microscopy apparatus 100 is operating, pulsing of the light source 27 with simultaneous scanning of the light strip 3 along the scanning direction 4 ensures that an illumination pattern 17a in the form of an asymmetrical 2D Bravais lattice G4, G5, G6 is generated with the precisely similar structure that is shown in Figure 4A.

### Example

A specific example will now be described with a 40x 1.25 water immersion objective 20. An amplitude lattice 17 is illuminated with a scanned laser line 3 and focussed into the sample 32 with a tubular lens 23 and the objective 20. The fluorescent light 25a is collected from the sample 32, transmitted by the dichroic mirror 21 and focussed with a tubular lens 22 onto a RS camera 31 with a continuously moved ROI 12 synchronised to the movement of the light line or laser line 3 with a height "k" of 16 µm - 20 µm. In the example, a transmitting amplitude lattice 17 with rectangularly (2D-asymmetrical) disposed holes 2, analogous to the pattern shown in Figure 2, is used with a=200µm and b=40 µm and a hole diameter D of 20 µm. This corresponds to a fill factor of 4%. The laser line 3 used for illumination has a width h=16 µm and is therefore somewhat smaller than the hole spacing "b" minus the diameter and smaller than the height "k" of the camera shutter. Because of the line-confocal detection, there is no crosstalk in the vertical direction (direction "b").

In the sample 32, for the 40x 1.25 objective 22, this corresponds to an illumination pattern 17a with a=5 µm, b=1 µm, D=0.5 µm. The resolution of the objective is ca. 200 nm FHMM (FWHM), and resolution-related dispersion of the pattern 17a is negligible for this broad estimation. If the lattice 17 is displaced in a manner such that there is a point of illumination 8 in the sample 32 every 330 nm (which results in a relatively homogeneous illumination), then 14x3=42 raw images are required. This corresponds to a displacement of exactly three points in direction "a" and exactly one point in direction "b", corresponding to the displacement vector shown in Figure 2.

If an image with a comparable confocality and with a comparable SNR were to be acquired with a symmetrical 2D pattern (square G2 or hexagonal G3), for the square G2 (a="b"=5 µm), a total of 14*14=196 raw images would be required. For the hexagonal pattern G3, then, (5/0.33-1) x (5*sin60°/0.33)=14*13=182 raw images would be required. Compared with this, the method in accordance with the invention is four to five times faster, because it needs correspondingly fewer acquisitions. By using cylindrical lenses 16 orientated onto the 2D holed masks 17, in addition with this example, the required power for the laser line 3 can be reduced by up to a factor of 5 µm/0.5 µm=10.

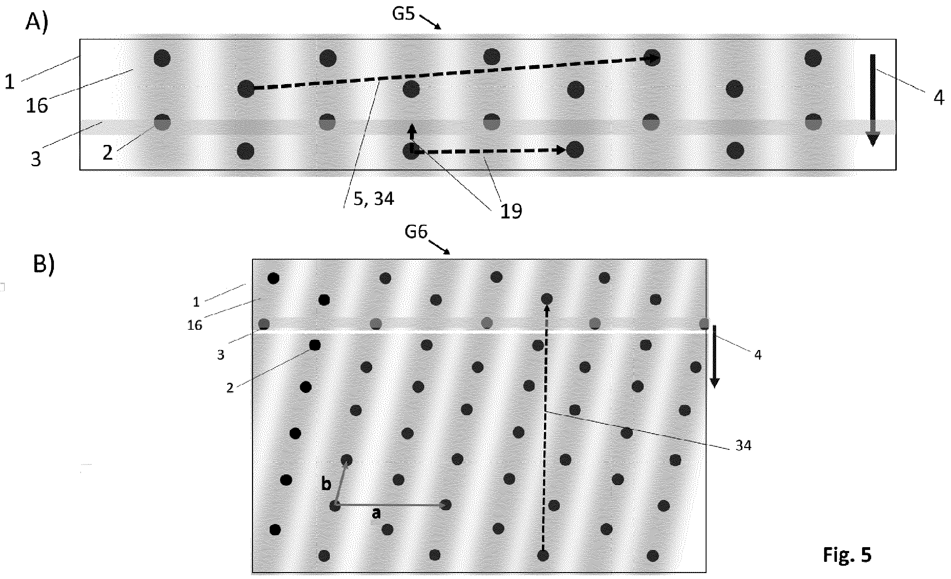

In this example, a rectangular lattice structure G4 was used. One advantage of this rectangular lattice structure G4 is that it can be efficiently combined with cylindrical lenses 16. In principle, however, all three asymmetrical 2D Bravais structures G4, G5, G6 may be envisaged (see Figure 1). Figure 5 shows an embodiment with a centred-rectangular (Figure 5A) and an oblique (Figure 5B) lattice structure G5, G6. In this regard, the light concentration with the aid of the cylindrical lenses 16 is in fact only approximately half as efficient as with the rectangular lattice G4. However, the advantage is that here, the vertical spacing of the points of illumination (b) can be set somewhat smaller, because in this case, a minimal crosstalk in the vertical direction is less critical than with the rectangular lattice G3. Specifically, in Figure 5A, cylindrical lenses (16) are orientated with a centred-rectangular amplitude mask in a manner such that the illumination lines generated by the cylindrical lenses 16 lie on the holes 2 of the 2D-modulated amplitude mask 17. The displacement vector in direction 34 in this case is somewhat shorter than with the rectangular pattern G4, wherein in addition, the illumination coverage is therefore somewhat smaller. For displacements 34 in two directions, the displacement vectors 19 may be identical to that of the rectangular pattern. Figure 5B shows an oblique holed pattern G6 with a displacement vector which is perpendicular to the line illumination 3. This can only be aligned with cylindrical lenses 16 which are not quite at right angles to the laser line 3. The error in scanning generated hereby is negligible, however, as long as the angle of the laser line 3 to the cylindrical lens 16 is in the range of 90° ± 10°.

Starting from the exemplary embodiments shown, the method in accordance with the invention and the microscopy apparatus 100 in accordance with the invention may be varied in many ways. As already discussed, examples which may be envisaged are different technical solutions for the illumination modulator 17. It is also possible to envisage a plurality of different asymmetrical 2D Bravais lattice structures G4, G5, G6 for the illumination modulator 17a.

## Claims

1. A microscopy method, wherein
- an illuminating light (27a) produced by a light source (27) illuminates a sample (32) over an illuminating beam path (24),
- an objective (20) is disposed in the illuminating beam path (24) in order to focus the illuminating light (27a) into the sample (32),
- a detector (31) with an adjustable region of interest (12) detects radiation (25a) from the sample (32) over a detecting beam path (25) containing the objective (20),
- an illumination modulator (17) is disposed in the illuminating beam path (24),
- optics (28) disposed in the illuminating beam path (24) together with the illumination modulator (17) produce a light strip (3) of the illuminating light (27a) in the sample (32) at the focus of the objective (20), wherein the light strip (3) comprises a plurality of points of illumination (8, 11) and has an axial direction (3a) which is transverse to the illuminating beam path (24) at the location of the sample (32),
- a scanning unit (29) disposed in the illuminating beam path (24) is controlled in order to displace the light strip (3) of points of illumination (8, 11) in the sample (32) in a scanning direction (4) which is transverse to the direction of propagation of the illuminating beam path (24),
**characterized in that** during a scan of the light strip (3) of the illuminating light (27a) in the sample (32), the illumination modulator (17) produces an illumination pattern (17a) which has a plurality of points of illumination (8, 11) which are disposed in the form of an asymmetrical 2D Bravais lattice (G4, G5, G6) with a first, longer primitive vector (a) and a second, shorter primitive vector (b) and **in that** the projection of the first primitive vector onto the axial direction (3a) of the light strip (3) is longer than the projection of the second primitive vector (b) onto the axial direction (3a) of the light strip (3).

2. The microscopy method as claimed in claim 1, **characterized in that** the region of interest (12) of the surface detector (31) is synchronised with a displacement of the light strip (3) by means of the scanning unit (29).

3. The microscopy method as claimed in one of the preceding claims, **characterized in that** an image of a plane or of a volume of the sample (32) is compiled from a plurality of acquisitions, of which each acquisition comprises a scan of the light strip (3) over the illumination modulator (17), wherein a relative movement between sample (32) and illumination pattern (17a) is carried out between two acquisitions, wherein the relative movements in order to produce an image are preferably carried out in a single direction in space or in two directions in space.

4. The microscopy method as claimed in one of the preceding claims, **characterized in that** the illumination modulator (17) has a plurality of mutually parallel cylindrical lenses (16), wherein one row of apertures (2) in a mask (17) is associated with each cylindrical lens (16).

5. The microscopy method as claimed in one of claims 1 to 3, **characterized in that** the illumination modulator (17) has a plurality of mutually parallel cylindrical lenses (16) and is illuminated with pulsed illuminating light (27a).

6. The microscopy method as claimed in one of the preceding claims, **characterized in that** the light source (27) produces coherent illuminating light (27a) and the illumination modulator (17) is configured to produce the illumination pattern (17a) inside the sample (32) by interference of the illuminating light (27a).

7. A microscopy apparatus (100), comprising
- a light source (27) which produces illuminating light (27a), which illuminates a sample (32) over an illuminating beam path (24),
- an objective (20) disposed in the illuminating beam path (24), for focussing the illuminating light (27a) into the sample (32),
- a detector (31) with an adjustable region of interest (12) which detects radiation (25a) from the sample (32) over a detection beam path (25) containing the objective (20),
- an illumination modulator (17) disposed in the illuminating beam path (24),
- optics (28) disposed in the illuminating beam path (24) which, together with the illumination modulator (17), produce a light strip (3) of the illuminating light (27a) in the sample (32) at the focus of the objective (20), wherein the light strip (3) comprises a plurality of points of illumination (8, 11) and has an axial direction (3a) which is transverse to the illuminating beam path (24) at the location of the sample (32),
- a scanning unit (29) disposed in the illuminating beam path (24), which is controlled in order to displace the light strip (3) of points of illumination (8, 11) in the sample (32) in a scanning direction (4) which is transverse to the direction of propagation of the illuminating beam path (24),
**characterized in that** during a scan of the light strip (3) of the illuminating light (27a) in the sample (32), the illumination modulator (17) produces an illumination pattern (17a) which has a plurality of points of illumination (8, 11) which are disposed in the form of an asymmetrical 2D Bravais lattice (G4, G5, G6) with a first, longer primitive vector (a) and a second, shorter primitive vector (b), and the projection of the first primitive vector (a) onto the axial direction (3a) of the light strip (3) is longer than the projection of the second primitive vector (b) onto the axial direction (3a) of the light strip (3).

8. The microscopy apparatus as claimed in claim 7, wherein the first primitive vector (a) of the Bravais lattice (G4, G5, G6) is longer by a factor of at least 1.5 than a primitive vector (b) of the Bravais lattice (G4, G5, G6), preferably by a factor of 2 to 15.

9. The microscopy apparatus as claimed in one of claims 7 to 8, wherein a region of interest (12) of the surface detector (31) can be selected.

10. The microscopy apparatus as claimed in one of claims 7 to 9, further comprising a controller (), which is configured so as to synchronise the region of interest (12) of the surface detector (31) with a displacement of the light strip (3) by means of the scanning unit (29).

11. The microscopy apparatus as claimed in one of claims 7 to 10, wherein the illumination modulator (17) has an amplitude mask (17) with a structure in the form of the asymmetrical 2D Bravais lattice (G4, G5, G6).

12. The microscopy apparatus as claimed in one of claims 7 to 11, wherein the illumination modulator (17) has a plurality of mutually parallel cylindrical lenses (16).

13. The microscopy apparatus as claimed in claim 12, wherein a row of apertures (2) in a mask (17) is associated with each cylindrical lens (16).

14. The microscopy apparatus as claimed in claim 12, wherein the light source (27) can be pulsed.

15. The microscopy apparatus as claimed in one of claims 7 to 14, comprising an evaluation unit (38) which is configured so as to compile an image of a plane or of a volume of the sample (32) from a plurality of acquisitions, of which each acquisition () comprises a scan of the light strip (3) over the illumination modulator (17).

## Patentansprüche

1. Mikroskopieverfahren, wobei
- ein von einer Lichtquelle (27) erzeugtes Beleuchtungslicht (27a) eine Probe (32) über einen Beleuchtungsstrahlengang (24) beleuchtet,
- ein Objektiv (20) im Beleuchtungsstrahlengang (24) angeordnet ist, um das Beleuchtungslicht (27a) in die Probe (32) zu fokussieren,
- ein Detektor (31) mit einem einstellbaren interessierenden Bereich (12) Strahlung (25a) von der Probe (32) über einen Detektionsstrahlengang (25) erfasst, der das Objektiv (20) enthält,
- ein Beleuchtungsmodulator (17) im Beleuchtungsstrahlengang (24) angeordnet ist,
- eine im Beleuchtungsstrahlengang (24) angeordnete Optik (28) erzeugt zusammen mit dem Beleuchtungsmodulator (17) einen Lichtstreifen (3) des Beleuchtungslichts (27a) in der Probe (32) im Fokus des Objektivs (20), wobei der Lichtstreifen (3) eine Vielzahl von Beleuchtungspunkten (8, 11) umfasst und eine axiale Richtung (3a) aufweist, die an der Stelle der Probe (32) quer zum Beleuchtungsstrahlengang (24) verläuft,
- eine im Beleuchtungsstrahlengang (24) angeordnete Abtasteinheit (29) gesteuert wird, um den Lichtstreifen (3) aus Beleuchtungspunkten (8, 11) in der Probe (32) in einer Abtastrichtung (4) zu verschieben, die quer zur Ausbreitungsrichtung des Beleuchtungsstrahlengangs (24) verläuft,
**dadurch gekennzeichnet, dass** während eines Abtastvorgangs des Lichtstreifens (3) des Beleuchtungslichts (27a) in der Probe (32), der Beleuchtungsmodulator (17) ein Beleuchtungsmuster (17a) erzeugt, das eine Vielzahl von Beleuchtungspunkten (8, 11) aufweist, die in Form eines asymmetrischen 2D-Bravais-Gitters (G4, G5, G6) angeordnet sind, mit einem ersten, längeren primitiven Vektor (a) und einem zweiten, kürzeren primitiven Vektor (b), und dadurch, dass die Projektion des ersten primitiven Vektors auf die Axialrichtung (3a) des Lichtstreifens (3) länger ist als die Projektion des zweiten primitiven Vektors (b) auf die Axialrichtung (3a) des Lichtstreifens (3).

2. Mikroskopieverfahren nach Anspruch 1, **dadurch gekennzeichnet, dass** der interessierende Bereich (12) des Oberflächendetektors (31) mittels der Abtasteinheit (29) mit einer Verschiebung des Lichtstreifens (3) synchronisiert wird.

3. Mikroskopieverfahren nach einem der vorhergehenden Ansprüche, **dadurch gekennzeichnet, dass** ein Bild einer Ebene oder eines Volumens der Probe (32) aus einer Vielzahl von Erfassungen zusammengestellt wird, wobei jede Erfassung einen Scan des Lichtstreifens (3) über den Beleuchtungsmodulator (17) umfasst, wobei zwischen zwei Erfassungen eine Relativbewegung zwischen der Probe (32) und dem Beleuchtungsmuster (17a) durchgeführt wird, wobei die Relativbewegungen zur Erzeugung eines Bildes vorzugsweise in einer einzigen Richtung im Raum oder in zwei Richtungen im Raum durchgeführt werden.

4. Mikroskopieverfahren nach einem der vorhergehenden Ansprüche, **dadurch gekennzeichnet, dass** der Beleuchtungsmodulator (17) mehrere zueinander parallele Zylinderlinsen (16) aufweist, wobei jeder Zylinderlinse (16) eine Reihe von Öffnungen (2) in einer Maske (17) zugeordnet ist.

5. Mikroskopieverfahren nach einem der Ansprüche 1 bis 3, **dadurch gekennzeichnet, dass** der Beleuchtungsmodulator (17) mehrere zueinander parallele Zylinderlinsen (16) aufweist und mit gepulstem Beleuchtungslicht (27a) beleuchtet wird.

6. Mikroskopieverfahren nach einem der vorhergehenden Ansprüche, **dadurch gekennzeichnet, dass** die Lichtquelle (27) kohärentes Beleuchtungslicht (27a) erzeugt und der Beleuchtungsmodulator (17) so konfiguriert ist, dass er das Beleuchtungsmuster (17a) innerhalb der Probe (32) durch Interferenz des Beleuchtungslichts (27a) erzeugt.

7. Mikroskopievorrichtung (100), umfassend
- eine Lichtquelle (27), die Beleuchtungslicht (27a) erzeugt, das eine Probe (32) über einen Beleuchtungsstrahlengang (24) beleuchtet,
- ein im Beleuchtungsstrahlengang (24) angeordnetes Objektiv (20) zum Fokussieren des Beleuchtungslichts (27a) in die Probe (32),
- einen Detektor (31) mit einem einstellbaren interessierenden Bereich (12), der Strahlung (25a) von der Probe (32) über einen Detektionsstrahlengang (25) erfasst, der das Objektiv (20) enthält,
- einen im Beleuchtungsstrahlengang (24) angeordneten Beleuchtungsmodulator (17),
- eine im Beleuchtungsstrahlengang (24) angeordnete Optik (28), die zusammen mit dem Beleuchtungsmodulator (17), einen Lichtstreifen (3) des Beleuchtungslichts (27a) in der Probe (32) im Fokus des Objektivs (20) erzeugt, wobei der Lichtstreifen (3) eine Vielzahl von Beleuchtungspunkten (8, 11) umfasst und eine axiale Richtung (3a) aufweist, die an der Stelle der Probe (32) quer zum Beleuchtungsstrahlengang (24) verläuft,
- eine im Beleuchtungsstrahlengang (24) angeordnete Abtasteinheit (29), die so gesteuert wird, dass sie den Lichtstreifen (3) aus Beleuchtungspunkten (8, 11) in der Probe (32) in einer Abtastrichtung (4) verschiebt, die quer zur Ausbreitungsrichtung des Beleuchtungsstrahlengangs (24) verläuft,
**dadurch gekennzeichnet, dass** während eines Abtastvorgangs des Lichtstreifens (3) des Beleuchtungslichts (27a) in der Probe (32), der Beleuchtungsmodulator (17) ein Beleuchtungsmuster (17a) erzeugt, das eine Vielzahl von Beleuchtungspunkten (8, 11) aufweist, die in Form eines asymmetrischen 2D-Bravais-Gitters (G4, G5, G6) angeordnet sind, mit einem ersten, längeren primitiven Vektor (a) und einem zweiten, kürzeren primitiven Vektor (b), und die Projektion des ersten primitiven Vektors (a) auf die Axialrichtung (3a) des Lichtstreifens (3) länger ist als die Projektion des zweiten primitiven Vektors (b) auf die Axialrichtung (3a) des Lichtstreifens (3).

8. Mikroskopievorrichtung nach Anspruch 7, wobei der erste primitive Vektor (a) des Bravais-Gitters (G4, G5, G6) um einen Faktor von mindestens 1,5 länger ist als ein primitiver Vektor (b) des Bravais-Gitters (G4, G5, G6), vorzugsweise um einen Faktor von 2 bis 15.

9. Mikroskopievorrichtung nach einem der Ansprüche 7 bis 8, wobei ein interessierender Bereich (12) des Oberflächendetektors (31) ausgewählt werden kann.

10. Mikroskopievorrichtung nach einem der Ansprüche 7 bis 9, ferner umfassend eine Steuereinheit (), die so konfiguriert ist, dass sie den interessierenden Bereich (12) des Oberflächendetektors (31) mit einer Verschiebung des Lichtstreifens (3) mittels der Abtasteinheit (29) synchronisiert.

11. Mikroskopievorrichtung nach einem der Ansprüche 7 bis 10, wobei der Beleuchtungsmodulator (17) eine Amplitudenmaske (17) mit einer Struktur in Form des asymmetrischen 2D-Bravais-Gitters (G4, G5, G6) aufweist.

12. Mikroskopievorrichtung nach einem der Ansprüche 7 bis 11, wobei der Beleuchtungsmodulator (17) mehrere zueinander parallele Zylinderlinsen (16) aufweist.

13. Mikroskopievorrichtung nach Anspruch 12, wobei jeder Zylinderlinse (16) eine Reihe von Öffnungen (2) in einer Maske (17) zugeordnet ist.

14. Mikroskopievorrichtung nach Anspruch 12, wobei die Lichtquelle (27) gepulst werden kann.

15. Mikroskopvorrichtung nach einem der Ansprüche 7 bis 14, umfassend eine Auswertungseinheit (38), die so konfiguriert ist, dass sie aus einer Vielzahl von Erfassungen ein Bild einer Ebene oder eines Volumens der Probe (32) zusammenstellt, wobei jede Erfassung () einen Scan des Lichtstreifens (3) über den Beleuchtungsmodulator (17) umfasst.

## Revendications

1. Procédé de microscopie, dans lequel
- une lumière d'illumination (27a) produite par une source de lumière (27) illumine un échantillon (32) sur un chemin de faisceau d'illumination (24),
- un objectif (20) est disposé dans le chemin de faisceau d'illumination (24) pour concentrer le chemin d'illumination (27a) dans l'échantillon (32),
- un détecteur (31) avec une zone d'intérêt ajustable (12) détecte le rayonnement (25a) de l'échantillon (32) sur un chemin de faisceau de détection (25) contenant l'objectif (20),
- un modulateur d'illumination (17) est disposé dans le chemin de faisceau d'illumination (24),
- une optique (28) disposée dans le chemin de faisceau d'illumination (24) ensemble avec le modulateur d'illumination (17) produisent une bande de lumière (3) de la lumière d'illumination (27a) dans l'échantillon (32) au point focal de l'objectif (20), la bande de lumière (3) comprenant une pluralité de points d'illumination (8, 11) et ayant une direction axiale (3a) qui est transversale au chemin de faisceau d'illumination (24) au site de l'échantillon (32),
- une unité de scannage (29) disposée dans le chemin de faisceau d'illumination (24) est commandée pour déplacer la bande de lumière (3) de points d'illumination (8, 11) dans l'échantillon (32) dans une direction de scannage (4) qui est transversale à la direction de propagation du chemin de faisceau d'illumination (24),
**caractérisé en ce que** durant un scan de la bande de lumière (3) de la lumière d'illumination (27a) dans l'échantillon (32), le modulateur d'illumination (17) produit un profil d'illumination (17a) qui a une pluralité de points d'illumination (8, 11) qui sont disposés sous la forme d'un réseau de Bravais 2D asymétrique (G4, G5, G6) avec un premier, vecteur primitif plus long (a) et un second, vecteur primitif plus court (b) et **en ce que** la projection du premier vecteur primitif sur la direction axiale (3a) de la bande de lumière (3) est plus longue que la projection du second vecteur primitif (b) sur la direction axiale (3a) de la bande de lumière (3).

2. Procédé de microscopie selon la revendication 1, **caractérisé en ce que** la zone d'intérêt (12) du détecteur de surface (31) est synchronisée avec un déplacement de la bande de lumière (3) au moyen de l'unité de scannage (29).

3. Procédé de microscopie selon l'une des revendications précédentes, **caractérisé en ce qu'**une image d'un plan ou d'un volume de l'échantillon (32) est compilée à partir d'une pluralité d'acquisitions, dont chaque acquisition comprend un scan de la bande de lumière (3) sur le modulateur d'illumination (17), un mouvement relatif entre l'échantillon (32) et le profil d'illumination (17a) étant réalisé entre deux acquisitions, les mouvements relatifs pour produire une image étant de préférence réalisés dans une seule direction dans l'espace ou dans deux directions dans l'espace.

4. Procédé de microscopie selon l'une des revendications précédentes, **caractérisé en ce que** le modulateur d'illumination (17) a une pluralité de lentilles cylindriques mutuellement parallèles (16), une rangée d'ouvertures (2) dans un masque (17) étant associée avec chaque lentille cylindrique (16).

5. Procédé de microscopie selon l'une des revendications 1 à 3, **caractérisé en ce que** le modulateur d'illumination (17) a une pluralité de lentilles cylindriques mutuellement parallèles (16) et est illuminé avec de la lumière d'illumination impulsée (27a).

6. Procédé de microscopie selon l'une des revendications précédentes, **caractérisé en ce que** la source de lumière (27) produit une lumière d'illumination cohérente (27a) et le modulateur d'illumination (17) est configuré pour produire le profil d'illumination (17a) à l'intérieur de l'échantillon (32) par interférence de la lumière d'illumination (27a).

7. Appareil de microscopie (100), comprenant
- une source de lumière (27) qui produit une lumière d'illumination (27a), qui illumine un échantillon (32) sur un chemin de faisceau d'illumination (24),
- un objectif (20) disposé dans le chemin de faisceau d'illumination (24) pour concentrer la lumière d'illumination (27a) dans l'échantillon (32),
- un détecteur (31) avec une zone d'intérêt ajustable (12) qui détecte un rayonnement (25a) de l'échantillon (32) sur un chemin de faisceau de détection (25) contenant l'objectif (20),
- un modulateur d'illumination (17) disposé dans le chemin de faisceau d'illumination (24),
- une optique (28) disposée dans le chemin de faisceau d'illumination (24) qui, ensemble avec le modulateur d'illumination (17), produisent une bande de lumière (3) de la lumière d'illumination (27a) dans l'échantillon (32) au point focal de l'objectif (20), la bande de lumière (3) comprenant une pluralité de points d'illumination (8, 11) et ayant une direction axiale (3a) qui est transversale au chemin de faisceau d'illumination (24) au site de l'échantillon (32),
- une unité de scannage (29) disposée dans le chemin de faisceau d'illumination (24), qui est commandée pour déplacer la bande de lumière (3) de points d'illumination (8, 11) dans l'échantillon (32) dans une direction de scannage (4) qui est transversale à la direction de propagation du chemin de faisceau d'illumination (24),
**caractérisé en ce que** durant un scan de la bande de lumière (3) de la lumière d'illumination (27a) dans l'échantillon (32), le modulateur d'illumination (17) produit un profil d'illumination (17a) qui a une pluralité de points d'illumination (8, 11) qui sont disposés sous la forme d'un réseau de Bravais 2D asymétrique (G4, G5, G6) avec un premier vecteur primitif plus long (a) et un second vecteur primitif plus court (b) et la projection du premier vecteur primitif (a) sur la direction axiale (3a) de la bande de lumière (3) est plus longue que la projection du second vecteur primitif (b) sur la direction axiale (3a) de la bande de lumière (3).

8. Appareil de microscopie selon la revendication 7, dans lequel le premier vecteur primitif (a) du réseau de Bravais (G4, G5, G6) est plus long par un facteur d'au moins 1,5 qu'un vecteur primitif (b) du réseau de Bravais (G4, G5, G6), de préférence par un facteur de 2 à 15.

9. Appareil de microscopie selon l'une des revendications 7 à 8, dans lequel une zone d'intérêt (12) du détecteur de surface (31) peut être choisie.

10. Appareil de microscopie selon l'une des revendications 7 à 9, comprenant en outre un contrôleur (), qui est configuré pour synchroniser la zone d'intérêt (12) du détecteur de surface (31) avec un déplacement de la bande de lumière (3) au moyen de l'unité de scannage (29).

11. Appareil de microscopie selon l'une des revendications 7 à 10, dans lequel le modulateur d'illumination (17) a un masque d'amplitude (17) avec une structure sous forme du réseau de Bravais 2D asymétrique (G4, G5, G6).

12. Appareil de microscopie selon l'une des revendications 7 à 11, dans lequel le modulateur d'illumination (17) a une pluralité de lentilles cylindriques mutuellement parallèles (16).

13. Appareil de microscopie selon la revendication 12, dans lequel une rangée d'ouvertures (2) dans un masque (17) est associée avec chaque lentille cylindrique (16) .

14. Appareil de microscopie selon la revendication 12, dans lequel la source de lumière (27) peut être impulsée.

15. Appareil de microscopie selon l'une des revendications 7 à 14, comprenant une unité d'évaluation (38) qui est configurée pour compiler une image d'un plan ou d'un volume de l'échantillon (32) à partir d'une pluralité d'acquisitions, dont chaque acquisition () comprend un scan de la bande de lumière (3) sur le modulateur d'illumination (17).
